# EUROPEAN PATENT APPLICATION

(11) **EP 4 636 844 A1**
(43) Date of publication of application: **22.10.2025**
(21) Application number: 23904013.2
(22) Date of filing: 13.12.2023
(51) Int. Cl.: H01M 4/134, H01M 4/38, H01M 4/66, H01M 4/62, H01M 4/1395, H01M 4/04, H01M 10/052, H01M 4/02

(54) **LITHIUM METAL ANODE, ANODE PRECURSOR FOR SAME, AND METHODS FOR PRODUCING ANODE AND ANODE PRECURSOR**

(30) Priority: 16.12.2022 KR 20220177549
(71) Applicant: POSCO Holdings Inc., Pohang-si, Gyeongsangbuk-do 37859 (KR); POSTECH Research and Business Development Foundation, Pohang-si, Gyeongsangbuk-do 37673 (KR); RESEARCH INSTITUTE OF INDUSTRIAL SCIENCE & TECHNOLOGY, Pohang-si, Gyeongsangbuk-do 37673 (KR)
(72) Inventor: BAE, Hong-Youl, Pohang-si, Gyeongsangbuk-do 37673 (KR); PARK, Soo-Jin, Pohang-si, Gyeongsangbuk-do 37673 (KR); LEE, Sang-Yeop, Pohang-si, Gyeongsangbuk-do 37673 (KR); KIM, Jin-Hong, Pohang-si, Gyeongsangbuk-do 37662 (KR); BAE, Weon-Soo, Pohang-si, Gyeongsangbuk-do 37677 (KR); LEE, Sang-Lag, Pohang-si, Gyeongsangbuk-do 37560 (KR)
(74) Representative: Pfenning, Meinig & Partner mbB
(86) International application number: PCT/KR2023/020589
(87) International publication number: WO 2024/128814

(57) **Abstract**

The present invention relates to a lithium metal anode, an anode precursor for same, and methods for producing anode and anode precursor. A lithium metal anode according to another aspect of the present invention comprises: a current collector; a metal layer formed on the current collector; and a protective coating layer formed on the metal layer, wherein the metal layer contains an alloy of lithium in the interface in contact with the protective coating layer, and the protective coating layer is a mixture of a carbon-based material and a binder, the binder may be a polymer obtained by polymerizing a high-strength monomer grafted onto a high-ion conductivity monomer.

## Description

### Technical Field

The present disclosure relates to a lithium metal anode, a cathode precursor therefor, and a method for producing the same.

### Background Art

Lithium secondary batteries have mainly been used in small batteries such as those of mobile phones, laptops and the like. Recently, as the demand for medium and large batteries such as those of electric vehicles and the like increases, the need to increase the energy density of lithium secondary batteries has arisen.

Accordingly, lithium metal with high specific capacity is attracting attention as an anode. However, in the case of lithium metal anodes, it is not realistically easy to overcome the problem of reduced lifespan due to dendrite growth, and this problem has not been completely solved yet.

### Disclosure of Invention

### Technical Problem

An aspect of the present disclosure is to provide a lithium metal anode having high energy density and extended lifespan.

Another aspect of the present disclosure is to provide a precursor for manufacturing the lithium metal anode described above.

Another aspect of the present disclosure is to provide a method for manufacturing the lithium metal anode described above or the precursor described above.

The subject matter of the present disclosure is not limited to the above-described contents. Anyone having ordinary knowledge in the technical field to which the present disclosure belongs will have no difficulty in understanding additional subjects of the present disclosure from the overall contents described in this specification.

### Solution to Problem

According to an aspect of the present disclosure, a precursor of a lithium metal anode includes a current collector; a metal layer formed on the current collector; and a protective coating layer formed on the metal layer, wherein the protective coating layer is a mixture of a carbon-based material and a binder, and the binder is a polymer obtained by polymerizing a high-strength monomer grafted onto a high-ion conductive monomer or a polymer.

According to another aspect of the present disclosure, a lithium metal anode includes a current collector; a metal layer formed on the current collector; and a protective coating layer formed on the metal layer, wherein the metal layer includes a lithium alloy and lithium at an interface in contact with the protective coating layer, the protective coating layer is a mixture of a carbon-based material and a binder, and the binder is a polymer obtained by polymerizing a high-strength monomer grafted onto a high-ion conductive monomer or a polymer.

According to another aspect of the present disclosure, a method for producing a lithium metal anode precursor includes an operation of preparing a current collector; an operation of forming a metal layer on a surface of the current collector; and an operation of coating a slurry containing a carbon-based material, a binder, and a solvent on a surface of the metal layer and forming a protective coating layer, wherein the binder is a polymer obtained by polymerizing a high-strength monomer grafted onto a high-ion conductive monomer or a polymer.

According to another aspect of the present disclosure, a method for manufacturing a lithium metal anode includes an operation of preparing a current collector; an operation of forming a metal layer on a surface of the current collector; an operation of coating a slurry containing a carbon-based material, a binder, and a solvent on a surface of the metal layer and forming a protective coating layer; and an operation of electrodepositing a lithium metal on the anode precursor, wherein the binder is a polymer obtained by polymerizing a high-strength monomer grafted onto a high-ion conductive monomer or a polymer.

### Advantageous Effects of Invention

As described above, the present disclosure may provide an anode for a lithium secondary battery having high energy density and long lifespan by forming a protective coating layer including a binder polymerized with a grafted monomer on a lithium alloy layer of a thin film.

### Brief Description of Drawings

FIG. 1 is a scanning electron microscope image illustrating a cross-section of an anode precursor manufactured by Invention Example 1,
FIG. 2 is an image illustrating the shape of a lithium metal anode manufactured by Invention Example 4,
FIG. 3 provide photographs of cross-sections of lithium metal anodes manufactured according to Invention Example 4 and Comparative Example 4, observed using a scanning electron microscope.
FIG. 4 is an image illustrating the results of comparing the bonding characteristics of Invention Example 4 and Comparative Example 4, and
FIG. 5 is an asymmetric cell life graph of an all-solid-state battery manufactured using the anodes of Invention Example 4 and Comparative Example 4.

### Best Mode for the Invention

The embodiments of the present disclosure are not limited to the embodiments disclosed below. For example, those skilled in the art who understand the idea of the present disclosure will be able to easily suggest other embodiments included within the scope of the idea of the present disclosure through addition, modification, deletion of components, or the like, but this will also be considered to be included within the scope of the idea of the present disclosure.

In addition, throughout the specification, the term "including" a certain component means that, unless otherwise stated, other components may be included, rather than excluding other components.

In addition, it should be noted that, unless otherwise specified in the present disclosure, the mixing ratio or composition is based on weight.

In addition, each of the implementation examples described below is only one example of implementing the technical idea of the present disclosure, and the scope of the rights of the present disclosure is not limited to each implementation example.

Hereinafter, the present disclosure will be described in detail.

To maximize the energy density of the battery, a strategy for ultra-thin lithium metal to reduce the thickness of lithium to 20 µm or less is essential. However, there are still many difficulties in manufacturing lithium metal thinner through a commercialized process, and lithium metal anodes are problematic due to uneven current density and dendrite growth caused by electrochemical reactions during the charging and discharging process of secondary batteries. This may induce continuous side reactions with the electrolyte and eventually lead to internal short circuits where the anode and cathode come into contact. Such dendrite growth may also cause serious problems in terms of low life characteristics and stability. For this reason, it is difficult to practically utilize ultra-thin lithium metal anodes.

Various methods have been proposed to suppress such lithium dendrites and increase lifespan, but it is still difficult to simultaneously implement high energy density and sufficient lifespan characteristics through ultra-thin lithium.

The inventors of the present disclosure confirmed that, according to an embodiment of the present disclosure, a thin lithium-friendly metal layer is formed on the surface of the current collector, and that this metal layer is effective in suppressing the growth of lithium dendrites to be alloyed with lithium and improving the lifespan. However, the above-described process is only according to one advantageous process of the present disclosure, and is not necessarily limited thereto, and it is also possible to form a thin metal layer in the form of an alloy from the beginning.

In addition, according to an embodiment of the present disclosure, a protective coating layer may be formed on the surface of the metal layer. Since the protective coating layer has excellent ion transfer function and structural stability, it may enable lithium ions to be stably electrodeposited on the metal layer of the thin film and alloyed, and may help improve the charge/discharge lifespan by preventing direct contact between the electrolyte and the lithium metal.

Therefore, the anode precursor according to an embodiment of the present disclosure is a preliminary product to be processed into a lithium metal anode through subsequent electrodeposition of lithium metal, and may include a current collector, a metal layer formed on the current collector, and a protective coating layer formed on the metal layer.

The current collector may be any material that is used as a current collector of a lithium secondary battery, so its material and thickness are not particularly limited, and any material and thickness that may be used in the technical field to which the present disclosure belongs may be used. However, as some examples that do not limit the present disclosure, copper (Cu), nickel (Ni), stainless steel, and Invar alloy may be used, and a foil-shaped one may be used.

In addition, the metal layer of the present disclosure does not contain lithium, and may be used because it has high affinity with lithium and may be alloyed. By using such a metal, the lithium metal anode obtained later may include a lithium alloy layer. Metals that may be alloyed with lithium include Al, In, Ag, Au, Zn, Mg, Si, and the like, and these metals may be used alone or as alloys of two or more types.

By limiting the metal layer to a thin thickness, the thickness of the alloy layer formed later by alloying may be made thin. When the thickness of the alloy layer is made thin in this way, the energy density, which means the amount of energy per unit weight, may be increased. Considering these points, in an embodiment of the present disclosure, the thickness of the metal layer may be limited to 5 µm or less. To increase the energy density and suppress the problem of volume expansion, the thinner the thickness is, the more advantageous it is. However, if the thickness is too thin, the uniformity of the metal layer may be poor, which may limit the efficient formation of a lithium alloy. Therefore, in an embodiment of the present disclosure, the thickness of the metal layer may be limited to 10 nm or more. A more preferable thickness of the metal layer may be 100 nm to 500 nm.

In addition, the protective coating layer according to an embodiment of the present disclosure may be a mixture of a carbon-based material and a binder. The carbon-based material may be, but is not necessarily limited to, amorphous carbon such as furnace black, acetylene black, ketjen black, graphene, or the like. In addition, the binder may be a polymer obtained by polymerizing a high-strength monomer grafted onto a high-ion conductive monomer or a polymer. When grafting a high-strength monomer onto a high-ion conductive polymer, a portion of the high-strength monomer may be polymerized during the polymerization process after grafting. When forming a polymer after grafting monomers having two characteristics in this way, the physical/chemical properties of each monomer may be effectively utilized, and as a result, the protective coating layer may be stably bound to the electrode and excellent electrochemical characteristics may be implemented. In addition, according to an embodiment of the present disclosure, after forming the above-described protective coating layer, lithium may be electrodeposited through an electroplating process. In this case, lithium may be easily transferred to the metal layer on the bottom of the protective coating layer, and alloying may occur. Such easy ion transfer characteristics may be advantageous for the charging and replenishment of lithium ions as a lithium metal anode.

In addition, when the transfer of lithium ions into the protective coating layer is not easy, lithium is likely to accumulate on the surface of the protective coating layer during the lithium electrodeposition process or the battery charging process, easily forming dendrites. However, in the case of the anode provided in an embodiment of the present disclosure, lithium ions may be easily transferred to the bottom of the protective coating layer by the lithium metal alloy layer and the high ion-conductive binder included in the protective coating layer, so it is effective in suppressing the growth of dendrites.

The high-ion conductive monomer of the binder included in the protective coating layer is not particularly limited as long as it is easy to conduct ions, but in an embodiment of the present disclosure, may be one or two or more selected from vinyl acetate, ethylene glycol, aniline, ethylene imine, acrylonitrile, pyromellitic dianhydride, 4,4-oxydianiline, 3,4-dihydroxyphenylethylamine, hexamethylolmelamine, methyl cyanoacrylate, isophorone diisocyanate, and methylenediphenyl diisocyanate. The high-ion conductive polymer that may be included in the protective coating layer may be a polymer of the monomer.

In addition, the high-strength monomer may be one or two or more selected from acrylic acid, ethylene, propylene, styrene, methyl methacrylate, carbonic acid, vinyl chloride, carbonyl chloride, oxalic acid, and succinic acid.

At this time, the high-ion conductive monomer may be included in a ratio of 0.25 to 2 moles per 1 mole of the high-strength monomer. When the high-strength monomer is grafted using the high-ion conductive polymer as a starting material, the ratio of the moles of the monomer included in the polymer and the moles of the high-strength monomer may be within the above-described range. When added in the above-described ratio, the most optimal bonding stability may be obtained.

The protective coating layer may have a thickness of 1 to 20 µm. By securing a thickness of 1 µm or more, the structure may be preserved during the lithium metal electrodeposition process, and by setting the thickness to 20 µm or less, the interlayer resistance is prevented from increasing excessively, so that the lithium metal may be easily transferred under the protective coating layer, and the battery density may also be advantageously secured. A more preferable thickness of the protective coating layer may be 5 to 10 µm. When lithium metal is electrodeposited on the precursor to obtain an anode, the thickness of the entire anode layer including the protective layer (for example, the sum of the thicknesses of the metal layer and the protective layer) may be about 2 to 30 µm, and preferably, may be in the range of 10 to 25 µm.

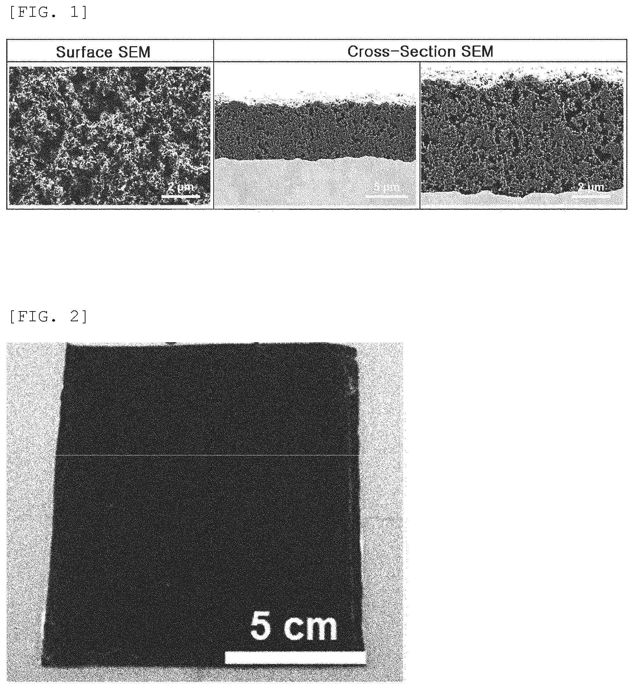

The protective coating layer described above may have a porosity of 40% or more. If the porosity is too small, it becomes difficult to impregnate the plating solution when plating lithium to manufacture the lithium metal anode described below, and thus, the lithium metal may be precipitated on the upper surface of the protective coating layer. Therefore, the larger the porosity, the more advantageous it is, but considering structural stability, the porosity may be limited to 80% or less. The porosity may be measured, for example, by taking a picture of a cross-section of a polished protective coating layer, as in FIG. 1, using an ion beam device, and a method of calculating the area of the pore region relative to the total area using an image analysis program.

In another embodiment of the present disclosure, a lithium metal anode may be provided.

A lithium metal anode according to an embodiment of the present disclosure may include a current collector, a metal layer formed on the current collector, and a protective coating layer formed on the metal layer, and the metal layer may include a lithium alloy and lithium at an interface in contact with the protective coating layer.

According to an embodiment of the present disclosure, the lithium alloy may be an alloy of metal lithium and one or two or more selected from Al, In, Ag, Au, Zn, Mg, Si, and the like.

The lithium metal anode may be manufactured from the anode precursor described above, but it may also be manufactured by other methods. For example, it may be manufactured by forming a separate alloy on the current collector and then forming a protective layer thereon, and any other possible method may be used to manufacture the lithium metal anode of the present disclosure.

Hereinafter, a method for manufacturing an anode precursor and a lithium metal anode of the present disclosure will be described. However, the manufacturing method described below is only one preferred example of manufacturing the anode precursor and the lithium metal anode of the present disclosure, and does not mean that the anode precursor or lithium metal anode of the present disclosure should be manufactured by the following method.

First, an operation of forming a metal layer on the surface of the current collector may be performed. There is no particular limitation on the method of forming the metal layer, and various methods such as plating, deposition, transfer and the like may be used.

Thereafter, a slurry containing a carbon-based material, a binder, and a solvent is coated on the surface of the metal layer and dried to form a protective coating layer, thereby obtaining an anode precursor.

According to an embodiment of the present disclosure, the mixing ratio of the carbon-based material and the binder may be adjusted so that the binder is in a ratio of 3 to 15% of the total weight of the carbon-based material and the binder. The amount of the solvent is not particularly limited, and may be mixed to an extent that the slurry may have a viscosity suitable for coating. However, in an embodiment of the present disclosure, the solvent may be added at a weight ratio of about 8 to 10 times the total solids content including all of the carbon-based material, the solid content in the binder, and the like. The above-described binder may be a polymer obtained by polymerizing a high-strength monomer grafted onto a high-ion conductive monomer or a polymer.

According to an embodiment of the present disclosure, a lithium metal anode may be prepared by preparing an anode precursor including a current collector, a metal layer formed on the current collector, and a protective coating layer formed on the metal layer, and then electrodepositing lithium metal on the anode precursor. The process of electrodepositing the lithium metal may be performed by an electrolytic plating method.

### Mode for the Invention

### (Example)

Hereinafter, the present disclosure will be specifically described through examples. However, it should be noted that the following examples are intended to illustrate and concretize the present disclosure and are not intended to limit the scope of the rights of the present disclosure. This is because the scope of the rights of the present disclosure is determined by the matters described in the patent claims and matters reasonably inferred therefrom.

### Preliminary Experiment - Bonding Strength Test of Protective Coating Layer

The following experiment was conducted to test the bonding strength of the protective coating layer according to the type and content of the binder. That is, a polymer (PVA-g-PAA) was obtained as a binder by polymerizing a high-strength monomer, acrylic acid monomer, grafted onto polyvinyl acetate, a high-ion conductive polymer (preliminary experiments 1 to 4). At this time, the number of moles of vinyl acetate monomer added per 1 mole of acrylic acid monomer contained in polyvinyl acetate was changed from 0.25 to 2 for each experiment. However, in the case of comparative experiment 1, instead of a polymer of a high-ion conductive monomer grafted with a high-strength monomer, as a binder, a mixture of SBR (styrene butadiene rubber) and CMC (carboxymethyl cellulose) in a weight ratio of 1:2 was used. Each binder was coated on one side of the current collector to form a polymer film, and dried at 130°C or higher to sufficiently remove the solvent. Then, the bonding strength between the current collector and the polymer film was measured through a peel-off test, and the results are illustrated in Table 1. The peel-off test was conducted by attaching a peeling tape on the polymer film and measuring the bonding strength while peeling the tape from the polymer film layer at a set speed using a UTM (Universal Testing Machine, Petrol Lab. DA-01). In Table 1, bonding strength A is the result when the peeling speed is 5 mm/min, and bonding strength B is the result when the peeling speed is 200 mm/min.

**[Table 1]**

| Distinction | High-ion conductive monomer/High-strength monomer mole ratio | Bonding Strength A (N/cm) | Bonding Strength B (N/cm) |
|---|---|---|---|
| Preliminary Experiment 1 | 0.25 | 1.29 | 0.86 |
| Prelimina ry Experiment 2 | 0.5 | 1.42 | 1.54 |
| Prelimina ry Experiment 3 | 1 | 1.84 | 2.52 |
| Prelimina ry Experiment 4 | 2 | 1.49 | 1.19 |
| Comparative Experiment 1 | Mixture of SBR and CMC in weight ratio of 1:2 | 0.87 | 0.55 |
| Comparative Experiment 2 | 0.1 | 0.75 | 0.52 |
| Comparative Experiment 3 | 4 | 1.08 | 0.83 |

As examined above, when polymerizing a high-strength monomer grafted onto a high-ion conductive polymer according to an embodiment of the present disclosure, high bonding strength was obtained. In particular, the bonding strength was excellent when the molar ratio of the high-ion conductive monomer per 1 mol of the high-strength monomer was between 0.25 and 2, and it was confirmed that it was the best when the value was 1. Comparative experiments 2 and 3 were cases where the monomer ratio was outside of the range specified in the present disclosure, and showed inferior bonding strength compared to that of the invention example.

### Manufacturing of Anode Precursor

A copper current collector was prepared, and silver was formed on the current collector to have a thickness of about 300 nm through an electroless plating process. In all examples except for Comparative Example 3, PVA-g-PAA (the binder of the Preliminary Experiment 3) in which vinyl acetate monomer and acrylic acid monomer had a molar ratio of 1:1 was prepared as a binder, and in the case of Comparative Example 3, the binder prepared by the Comparative Experiment 1 was used. The binder, carbon black, and water were mixed to prepare a slurry. The mixing ratio of water in the slurry was adjusted so that the slurry had a viscosity suitable for coating, and the ratio of carbon black and binder was adjusted for each example as illustrated in Table 2. The slurry was coated on a current collector using a blade and dried at 100°C for 10 minutes. Thereafter, it was vacuum-dried for an additional 3 hours to form a protective coating layer. It was confirmed that the protective coating layer had a thickness of about 5 µm in all examples. An anode precursor for a lithium metal anode was prepared through the above-described process. The porosity of the protective coating layer in the table was measured by taking a photo of the cross-section of the polished protective coating layer using an ion beam device and calculating the area of the pore area relative to the total area using an image analysis program.

**[Table 2]**

| Example | Binder | Carbon Black | Bonding | Bonding | Protective |
|---|---|---|---|---|---|
| Distinction | Content (weight%) | Content (weight%) | Strength A | Strength B | Coating Layer Porosity (%) |
| Comparative Example 1 | 2 | 98 | - | - | - |
| Invention Example 1 | 3 | 97 | 0.27 | 0.06 | 79 |
| Invention Example 2 | 6 | 94 | 0.78 | 0.41 | 68 |
| Invention Example 3 | 15 | 85 | 1.84 | 1.17 | 46 |
| Comparative Example 2 | 20 | 80 | 2.18 | 1.53 | 39 |
| Comparative Example 3 | 6 | 94 | 0.25 | 0.18 | 65 |

In the case of Comparative Example 1 in the above Table 2, since the protective coating layer was not attached to the extent that it was difficult to measure the bonding strength, the values of the bonding strength and porosity were not separately indicated. As can be seen from the results in Table 2, in the case in which the binder content is too low, the protective coating layer cannot be attached to the metal layer on the upper side of the current collector with sufficient bonding strength. Therefore, to have a certain degree of sufficient bonding strength, the ratio of the binder in the binder and carbon black needs to be 3% or more, and more preferably 6% or more. However, it was confirmed that when the binder content exceeded 15% and reached 20%, the bonding strength was excellent, but the porosity of the electrode became too low. Therefore, in an embodiment of the present disclosure, the preferable binder content in the protective coating layer could be set to 15% or less. FIG. 1 illustrates a cross-section of the anode precursor manufactured by the Invention Example 1. As can be seen in the drawing, the thickness of the protective coating layer was approximately 5 µm, and it was confirmed that sufficient pores were formed in the protective coating layer.

### Manufacturing of Lithium Metal Anode

### Invention Example 4

Electrolytic plating of lithium was performed on the anode precursor prepared according to the invention example 2 above. During plating, a lithium metal foil having a thickness of 500 µm was used as the counter electrode, and the electrodeposition solution contained lithium bis(fluorosulfonyl)imide and 1,2-dimethoxyethanol in proportions of 30 wt% and 68 wt%, respectively, and additionally contained lithium nitrate and fluoroethylene carbonate in an amount of 1 wt% each. The counter electrode was attached to a copper current collector while being insulated from the anode precursor, and was immersed in the electrodeposition solution. Thereafter, lithium was electrolytically plated on the metal layer of the anode precursor by applying a constant current. At this time, the applied current density was 4mA/cm², and lithium alloy and lithium metal layers having a thickness of approximately 10 µm were formed. The shape of the lithium metal anode obtained by the above-described process is illustrated in FIG. 2.

### Comparative Example 4

A lithium metal anode was manufactured in the same manner as in Invention Example 4 except that the anode precursor manufactured by Comparative Example 3 was used.

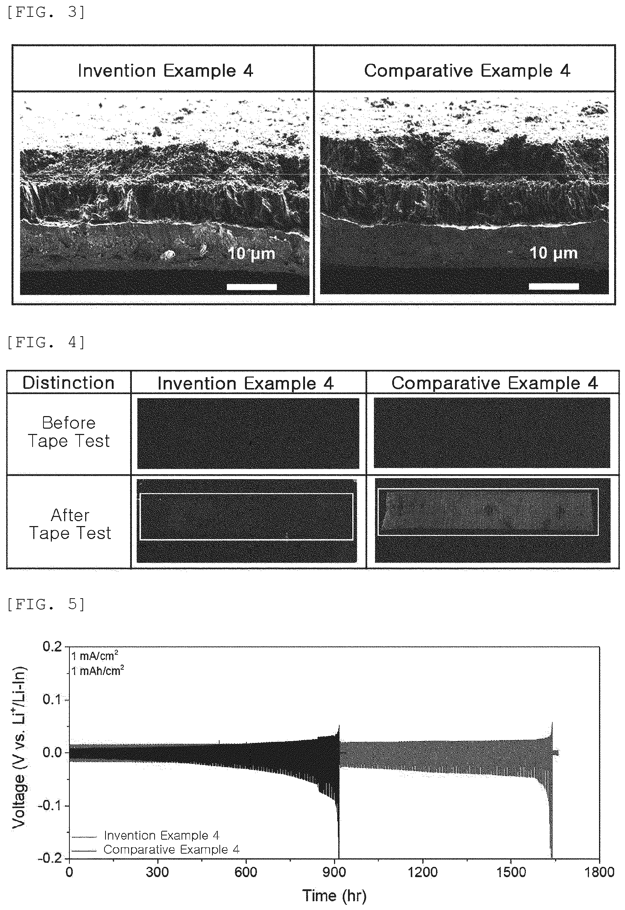

A cross-sectional photograph of the lithium metal anode manufactured by Invention Example 4 and Comparative Example 4 is illustrated in FIG. 3.

FIG. 4 shows the results of comparing the bonding characteristics of Invention Example 4 and Comparative Example 4. To evaluate the bonding characteristics, a tape (3M Magic 810D) was attached on and detached from the surface protective coating layer of the anode on which lithium was electrodeposited in a glove box, and the condition of the remaining protective coating layer was evaluated while detaching the same. As can be seen in the drawing, in the case of the lithium metal anode manufactured by Invention Example 4, the protective coating layer remained on the electrode even after the test, whereas in the case of the lithium metal anode manufactured by Comparative Example 4, most of the protective coating layer was lost.

### Battery Life Evaluation

An all-solid-state battery was manufactured using the lithium metal anode provided by the above-mentioned Invention Example 4 and Comparative Example 4, and the life characteristics thereof were evaluated.

A lithium-indium alloy (500 µm thick) was used as the counter electrode in the battery, and a sulfide-based argyrodite (700 µm thick) was used as the solid electrolyte. The solid electrolyte was pressurized to 370 MPa to form a dense electrolyte during battery assembly, and then the working electrode and the counter electrode were attached to both sides of the solid electrolyte at a pressure of 50 MPa to complete the battery assembly. The life evaluation was performed under the conditions of a current density of 1mA/cm² and a charge/discharge capacity of 1mAh/cm² in a pressurized environment of 16 MPa. The life of the electrodes including the anodes manufactured by respective examples is compared in Table 3 below. The life of the electrodes was expressed as the number of cycles until a short circuit occurred.

**[Table 3]**

| Distinction | Life (Number of Cycles) |
|---|---|
| Invention Example 4 | 819 |
| Comparative Example 4 | 458 |

As can be seen from Table 3 above, a battery including a lithium metal anode manufactured according to the conditions provided in an embodiment of the present disclosure showed an effect of increasing the lifespan by about 80% compared to a battery including a lithium metal anode manufactured according to a comparative example that deviates from the conditions of the present disclosure. FIG. 5 shows an asymmetric cell lifespan graph of all-solid-state batteries manufactured using the anodes of Invention Example 4 and Comparative Example 4. As can be seen from the drawing, in the case of Comparative Example 4, the lifespan ended after about 900 hours, but Invention Example 4 had a lifespan of nearly 1600 hours.

Therefore, the advantageous effects of the present disclosure could be confirmed.

## Claims

1. An anode precursor comprising:
a current collector;
a metal layer formed on the current collector; and
a protective coating layer formed on the metal layer,
wherein the protective coating layer is a mixture of a carbon-based material and a binder, and
the binder is a polymer obtained by polymerizing a high-strength monomer grafted onto a high-ion conductive monomer or a polymer.

2. The anode precursor of claim 1, wherein the metal layer has a thickness of 10 nm to 5 µm.

3. The anode precursor of claim 1, wherein the metal layer includes one or two selected from Al, In, Ag, Au, Zn, Mg, and Si.

4. The anode precursor of claim 1, wherein the protective coating layer has a thickness of 1 to 20 µm.

5. The anode precursor of claim 1, wherein the protective coating layer has a porosity of 40% or more.

6. The anode precursor of claim 1, wherein the high-ion conductive monomer is included in a ratio of 0.25 to 2 moles per 1 mole of the high-strength monomer.

7. A lithium metal anode comprising:
a current collector;
a metal layer formed on the current collector; and
a protective coating layer formed on the metal layer,
wherein the metal layer includes an alloy of lithium at an interface in contact with the protective coating layer,
the protective coating layer is a mixture of a carbon-based material and a binder, and
the binder is a polymer obtained by polymerizing a high-strength monomer grafted onto a high-ion conductive monomer or a polymer.

8. The lithium metal anode of claim 7, wherein the high-ion conductive monomer is one or two or more selected from vinyl acetate, ethylene glycol, aniline, ethylene imine, acrylonitrile, pyromellitic dianhydride, 4,4-oxydianiline, 3,4-dihydroxyphenylethylamine, hexamethylolmelamine, methyl cyanoacrylate, isophorone diisocyanate, and methylenediphenyl diisocyanate, and the high-ion conductive polymer is a polymer obtained by polymerizing the high-ion conductive monomer.

9. The lithium metal anode of claim 7, wherein the high-strength monomer is one or two or more selected from acrylic acid, ethylene, propylene, styrene, methyl methacrylate, carbonic acid, vinyl chloride, carbonyl chloride, oxalic acid, and succinic acid.

10. The lithium metal anode of claim 7, wherein the high-ion conductive monomer is included in a ratio of 0.25 to 2 moles per 1 mole of the high-strength monomer.

11. The lithium metal anode of claim 7, wherein the lithium alloy is an alloy of one or two or more selected from Al, In, Ag, Au, Zn, Mg, and Si.

12. The lithium metal anode of claim 7, wherein the metal layer further includes lithium metal.

13. The lithium metal anode of claim 7, wherein a sum of thicknesses of the metal layer and the protective coating layer is 2 to 30 µm.

14. A method for producing an anode precursor, comprising:
an operation of preparing a current collector;
an operation of forming a metal layer on a surface of the current collector; and
an operation of coating a slurry containing a carbon-based material, a binder, and a solvent on a surface of the metal layer and forming a protective coating layer,
wherein the binder is a polymer obtained by polymerizing a high-strength monomer grafted onto a high-ion conductive monomer.

15. The method for producing an anode precursor of claim 7, wherein the high-ion conductive monomer is included in a ratio of 0.25 to 2 moles per 1 mole of the high-strength monomer.

16. A method for manufacturing a lithium metal anode, comprising:
an operation of preparing a current collector;
an operation of forming a metal layer on a surface of the current collector;
an operation of coating a slurry containing a carbon-based material, a binder, and a solvent on a surface of the metal layer and forming a protective coating layer; and
an operation of electrodepositing a lithium metal on the anode precursor,
wherein the binder is a polymer obtained by polymerizing a high-strength monomer grafted onto a high-ion conductive monomer.

17. The method for manufacturing a lithium metal anode of claim 16, wherein the high-ion conductive monomer is one or two or more selected from vinyl acetate, ethylene glycol, aniline, ethylene imine, acrylonitrile, pyromellitic dianhydride, 4,4-oxydianiline, 3,4-dihydroxyphenylethylamine, hexamethylolmelamine, methyl cyanoacrylate, isophorone diisocyanate, and methylenediphenyl diisocyanate, and the high-ion conductive polymer is a polymer obtained by polymerizing the high-ion conductive monomer.

18. The method for manufacturing a lithium metal anode of claim 16, wherein the high-strength monomer is one or two or more selected from acrylic acid, ethylene, propylene, styrene, methyl methacrylate, carbonic acid, vinyl chloride, carbonyl chloride, oxalic acid, and succinic acid.

19. The method for manufacturing a lithium metal anode of claim 16, wherein a weight ratio of the binder to a total weight of the carbon-based material and the binder is 3 to 15%.

20. The lithium metal anode of claim 16, wherein the high-ion conductive monomer is included in a ratio of 0.25 to 2 moles per 1 mole of the high-strength monomer.
